# EUROPEAN PATENT APPLICATION

(11) **EP 4 609 702 A1**
(43) Date of publication of application: **03.09.2025**
(21) Application number: 25150274.6
(22) Date of filing: 06.01.2025
(51) Int. Cl.: A01G 20/47, A47L 5/24, A47L 9/28, H05F 3/02

(54) **VACUUM DEVICE**

(30) Priority: 01.03.2024 CN 202410235351
(71) Applicant: Nanjing Chervon Industry Co., Ltd., Nanjing, Jiangsu 211106 (CN)
(72) Inventor: LI, Jingwei, Nanjing, Jiangsu 211106, (CN); YAMAOKA, Toshinari, Nanjing, Jiangsu 211106, (CN); GUO, Jianpeng, Nanjing, Jiangsu 211106, (CN)
(74) Representative: Sun, Yiming

(57) **Abstract**

An airflow device includes an electric motor (200); a fan assembly (300) connected to the electric motor (200), where the fan assembly (300) is driven by the electric motor (200) to generate the airflow; and a suction pipe (400) for sucking up a sucked object. The fan assembly (300) includes fan blades. The airflow device further includes a first electrostatic conduction device (500), where the first electrostatic conduction device (500) includes an end facing the fan blades and the other end for conducting static electricity of the airflow device to the ground.

## Description

### TECHNICAL FIELD

The present application relates to an airflow device and, in particular, to a leaf collection device.

### BACKGROUND

A blower vacuum in the related art is a common electric outdoor cleaning tool mainly used for cleaning and collecting garbage such as leaves. The blower vacuum generates suction to suck up and collect the fallen leaves, and the collected fallen leaves are then transferred to a collection device for centralized processing.

The blower vacuum in the existing art sucks leaves and the like into a pipe through the rotation of an internal fan, and the leaves are collected through the pipe into a leaf collection bag provided in the blower vacuum. When the fan rotates, the fan rubs against leaves and the like and generates static electricity.

This part provides background information related to the present application, and the background information is not necessarily the existing art.

### SUMMARY

The present application adopts the technical solutions below. An airflow device includes an electric motor; a fan assembly connected to the electric motor, where the fan assembly is driven by the electric motor to generate the airflow; and a suction pipe for sucking up a sucked object. The fan assembly includes fan blades. The airflow device further includes a first electrostatic conduction device, where the first electrostatic conduction device includes an end facing the fan blades and the other end for conducting static electricity of the airflow device to the ground.

In some examples, the suction pipe includes a first end facing the fan blades, a second end facing away from the fan blades, and a pipe body connecting the first end to the second end.

In some examples, the first electrostatic conduction device includes a first electrostatic conduction component and a second electrostatic conduction component, the first electrostatic conduction component is disposed at the first end, and the second electrostatic conduction component is disposed on the pipe body.

In some examples, the second electrostatic conduction component is connected to the first electrostatic conduction component.

In some examples, the first electrostatic conduction device includes a third electrostatic conduction component, the third electrostatic conduction component is disposed at the second end, and the third electrostatic conduction component is connected to the second electrostatic conduction component.

In some examples, the third electrostatic conduction component is used for being in direct or indirect contact with the ground.

In some examples, the first electrostatic conduction device is made of a conductive material.

In some examples, the distance between the first electrostatic conduction component and the fan blades is less than or equal to 15 mm.

In some examples, the airflow device further includes an air blowing port and a collection device, where the collection device is connected to the air blowing port.

In some examples, the collection device is in direct or indirect contact with the ground to conduct the static electricity of the airflow device to the ground.

In some examples, the collection device is made of a conductive material.

In some examples, the collection device includes a second electrostatic conduction device, and the second electrostatic conduction device includes a first end connected to the collection device and a second end facing away from the collection device.

In some examples, the second electrostatic conduction device is made of the conductive material, and the second end of the second electrostatic conduction device is used for being in direct or indirect contact with the ground to conduct the static electricity of the airflow device to the ground.

In some examples, the airflow device further includes a third electrostatic conduction device, where the third electrostatic conduction device has a first end facing the fan blades and a second end connected to the air blowing port, and the second end of the third electrostatic conduction device includes at least one tip.

In some examples, the first end of the third electrostatic conduction device is electrically connected to the electric motor, and the at least one tip is disposed inside the air blowing port.

In some examples, an airflow device includes an electric motor; a fan assembly connected to the electric motor, where the fan assembly is driven by the electric motor to generate the airflow; a suction pipe for sucking up a sucked object; and an air blowing port detachably connected to a blowing cylinder or a collection device. The fan assembly includes fan blades, and the fan blades rub against the sucked object to generate static electricity. The suction pipe includes a first end facing the fan blades and a second end used for being in contact with the ground. The airflow device further includes a first electrostatic conduction device, the first electrostatic conduction device includes a first electrostatic conduction component disposed at the first end of the suction pipe and a third electrostatic conduction component disposed at the second end of the suction pipe, and the first electrostatic conduction component and the third electrostatic conduction component are connected through a second electrostatic conduction component.

In some examples, the suction pipe includes a pipe body connecting the first end to the second end, and the second electrostatic conduction component is disposed on the pipe body.

In some examples, the third electrostatic conduction component is used for being in direct or indirect contact with the ground.

In some examples, the airflow device further includes a third electrostatic conduction device, where the third electrostatic conduction device has a first end facing the fan blades and a second end connected to the air blowing port, and the second end of the third electrostatic conduction device includes at least one tip.

In some examples, the third electrostatic conduction device is made of a conductive material, the first end of the third electrostatic conduction device is electrically connected to the electric motor, and the at least one tip is disposed inside the air blowing port.

### BRIEF DESCRIPTION OF DRAWINGS

FIG. 1 is a perspective view of an airflow device according to an example.
FIG. 2 is a side sectional view of the airflow device in FIG. 1.
FIG. 3 is a perspective view of a fan assembly of the airflow device in FIG. 1.
FIG. 4 is a perspective view of a first electrostatic conduction device of the airflow device in FIG. 1.
FIG. 5 is a perspective view of a first electrostatic conduction device of the airflow device in FIG. 1 from another perspective.
FIG. 6 is a perspective view illustrating the connection of a first electrostatic conduction device of the airflow device in FIG. 1.
FIG. 7 is a perspective view of a first electrostatic conduction component of a first electrostatic conduction device of an airflow device according to an example, where the first electrostatic conduction component is formed by a tip.
FIG. 8 is a side view of a fourth electrostatic conduction component included in a first electrostatic conduction device of an airflow device according to an example.
FIG. 9 is a side view illustrating the connection of a second electrostatic conduction device of an airflow device according to an example.
FIG. 10 is a side view illustrating the connection of a third electrostatic conduction device of an airflow device according to an example.
FIG. 11 is a side sectional view illustrating the connection of a third electrostatic conduction device of the airflow device in FIG. 10.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear"" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

The present application provides an airflow device for generating the airflow to suck up and collect light and thin objects such as fallen leaves. In some examples, the airflow device is a blower vacuum. In some other examples, the airflow device is a garden leaf vacuum.

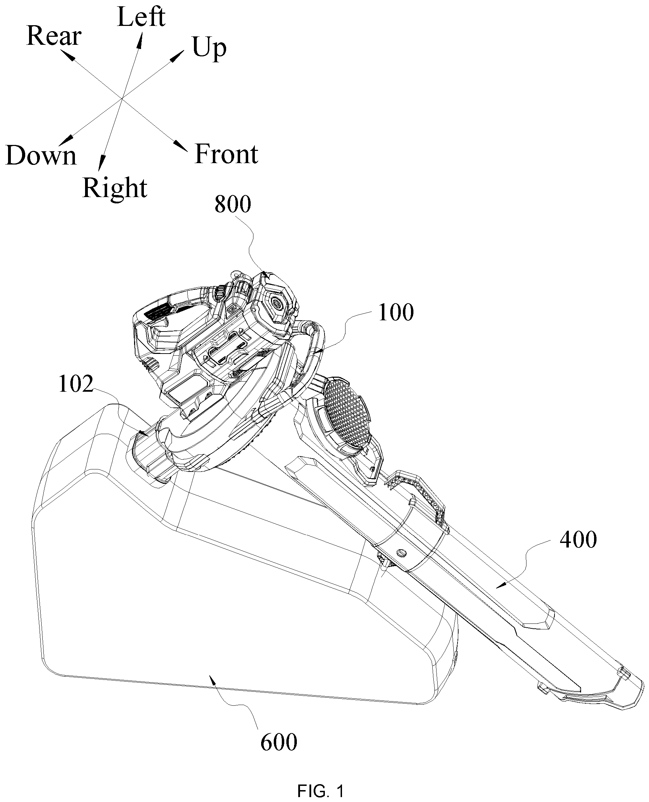

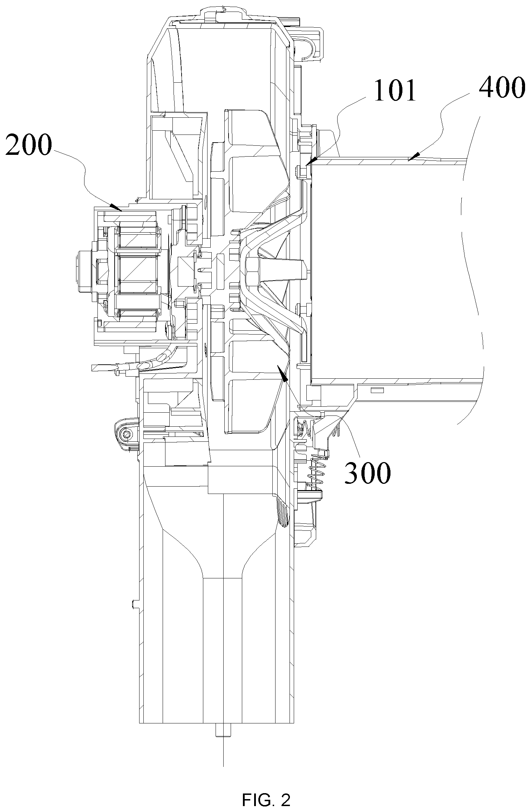

Referring to FIGS. 1 to 3, the airflow device includes a housing 100, an electric motor 200, and a fan assembly 300. The electric motor 200 is disposed in the housing 100. The fan assembly 300 is connected to the electric motor 200. The fan assembly 300 is driven by the electric motor 200 to generate the airflow. The housing 100 has an air suction port 101 and an air blowing port 102. The air suction port 101 is provided corresponding to the fan assembly 300. When the fan assembly 300 is working, the airflow enters from the air suction port 101, passes through the electric motor 200, and then flows out from the air blowing port 102 so that air blowing or air suction can be achieved, and at the same time, the airflow can dissipate heat of the electric motor 200 during the flowing process. As shown in FIG. 1, the airflow device further includes a suction pipe 400 detachably disposed at the air suction port 101, and the other end of the suction pipe 400 which is not connected to the air suction port 101 forms a suction port for sucking up sucked objects. The fan assembly 300 is connected to a motor shaft of the electric motor 200. Driven by the electric motor 200, the motor shaft rotates and synchronously drives the fan assembly 300 to rotate. The rotation of the fan assembly 300 generates negative pressure, thereby providing power for the airflow device to suck up fallen leaves and the like. The suction pipe 400 sucks up sucked objects through negative pressure, and the sucked objects include, but are not limited to, fallen leaves, dust, branches, small stones, and the like.

In some examples, the suction pipe 400 is a hose with a smooth inner wall, and the hose is easy to store. In some specific examples, the suction pipe 400 is a bellows structure, specifically including spiral support strips for support and a soft ventilation material covering the spiral support strips. The soft ventilation material may be the cotton cloth, the plastic cloth, or the like. The use of the soft ventilation material can not only block objects such as fallen leaves in the suction pipe 400 but also play a role in ventilation. The suction pipe 400 with a hose structure may be used for various airflow devices capable of blowing or sucking air, such as a handheld blower, a backpack blower, a blower vacuum, and a vacuum cleaner.

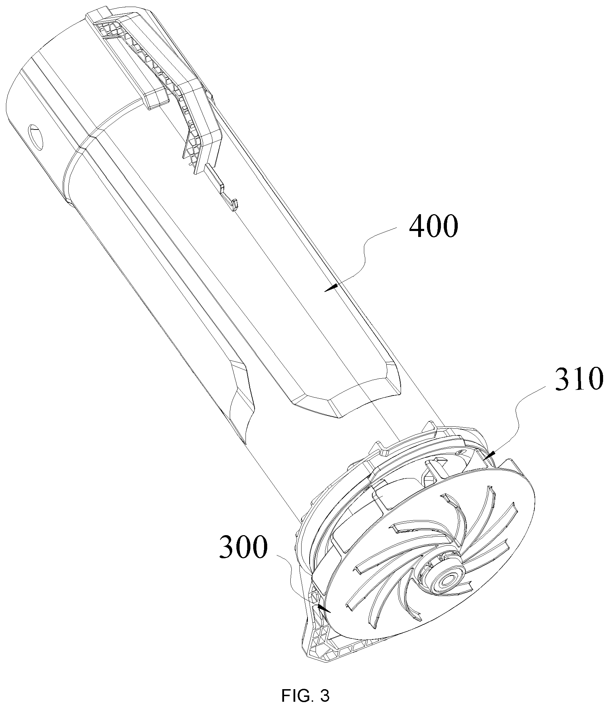

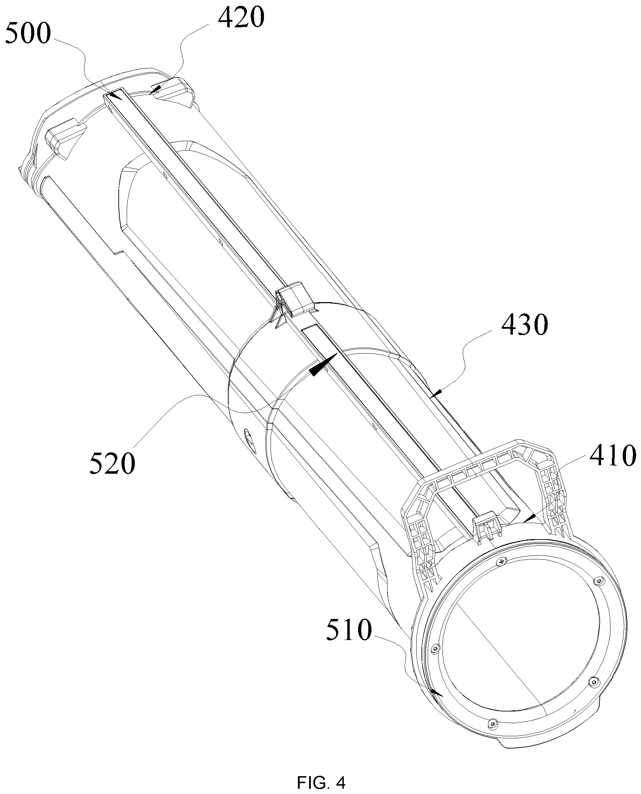

As shown in FIG. 3, the fan assembly 300 includes fan blades 310. As shown in FIG. 4, the suction pipe 400 includes a first end 410, a second end 420, and a pipe body 430 connecting the first end 410 to the second end 420. The first end 410 faces the fan blades 310, and the second end 420 faces away from the fan blades 310. The first end 410 is closer to the fan blades 310 than the second end 420. Specifically, the first end 410 is closer to the fan blades 310 than the second end 420, and the second end 420 is farther away from the fan blades 310 than the first end 410. The first end 410 of the suction pipe 400 facing the fan blades 310 refers to an end of the suction pipe 400 which is connected to the air suction port 101. The first end 410, the second end 420, and the pipe body 430 of the suction pipe 400 are all made of the plastic material, that is, the suction pipe 400 is made of the plastic material. When the airflow device is operating, the electric motor 200 drives the fan blades 310 to rotate to generate negative pressure. The suction pipe 400 sucks up sucked objects through the negative pressure. The sucked objects enter from the second end 420 of the suction pipe 400, pass through the pipe body 430 of the suction pipe 400, and reach the first end 410 of the suction pipe 400. At this time, since the fan blades 310 are made of the plastic material, the fan blades 310 rub against the sucked objects to generate a great amount of static electricity. On the one hand, a control circuit board is provided inside the airflow device, and static electricity has an adverse effect on the control circuit board. If static electricity exists for a long time, static electricity breaks down the control circuit board, causing damage to the control circuit board and making the airflow device unusable. On the other hand, a grip for the user to hold is provided on the airflow device, and the grip is connected to the inside of the airflow device through the wire. Static electricity is transmitted to the grip through the wire, causing the user to feel uncomfortable with the hand shocked by static electricity, resulting in a relatively poor user experience.

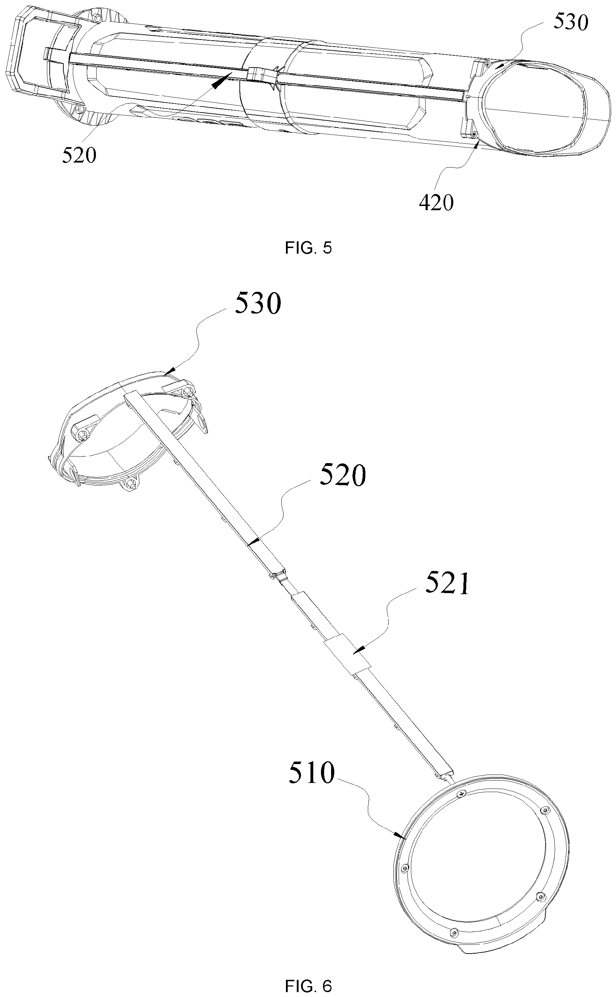

As shown in FIGS. 4 and 5, the airflow device includes a first electrostatic conduction device 500. The first electrostatic conduction device 500 includes an end facing the fan blades 310 and the other end for being in contact with the ground. When the airflow device is used, static electricity generated on the fan blades 310 is conducted to the ground through the first electrostatic conduction device 500. Optionally, the first electrostatic conduction device 500 includes a first electrostatic conduction component 510 at the end facing the fan blades 310 and a third electrostatic conduction component 530 at the other end for being in contact with the ground. That the first electrostatic conduction component 510 faces the fan blades specifically refers to that the first electrostatic conduction component 510 is closer to the fan blades than the third electrostatic conduction component 530.

In some examples, as shown in FIGS. 4 to 6, the first electrostatic conduction device 500 includes the first electrostatic conduction component 510, a second electrostatic conduction component 520, and the third electrostatic conduction component 530. In some examples, the first electrostatic conduction component 510, the second electrostatic conduction component 520, and the third electrostatic conduction component 530 may be integrally formed. In some examples, the first electrostatic conduction component 510, the second electrostatic conduction component 520, and the third electrostatic conduction component 530 may be separately provided.

The first electrostatic conduction component 510 is disposed at the first end 410 of the suction pipe 400 and faces the fan blades 310. The first electrostatic conduction component 510 induces static electricity on the fan blades 310 by induction. For example, when static electricity generated by the fan blades 310 rubbing against the sucked objects is the positive charge, the originally uncharged first electrostatic conduction component 510 generates the negative charge to induce the positive charge on the fan blades 310. Similarly, when static electricity generated by the fan blades 310 rubbing against the sucked objects is the negative charge, the originally uncharged first electrostatic conduction component 510 generates the positive charge to induce the negative charge on the fan blades 310. Optionally, the distance between the first electrostatic conduction component 510 and the fan blades 310 is less than or equal to 15 mm.

In some examples, the distance between the first electrostatic conduction component 510 and the fan blades 310 is greater than 1 mm and less than or equal to 15 mm. In some examples, the distance between the first electrostatic conduction component 510 and the fan blades 310 is greater than 1 mm and less than or equal to 10 mm. In some examples, the distance between the first electrostatic conduction component 510 and the fan blades 310 is greater than 1 mm and less than or equal to 5 mm. In some examples, the distance between the first electrostatic conduction component 510 and the fan blades 310 is greater than 1 mm and less than or equal to 3 mm. In some examples, the distance between the first electrostatic conduction component 510 and the fan blades 310 is greater than 3 mm and less than or equal to 10 mm. In some examples, the distance between the first electrostatic conduction component 510 and the fan blades 310 is greater than 3 mm and less than or equal to 5 mm.

Optionally, the first electrostatic conduction component 510 may be made of the aluminum alloy. Optionally, the first electrostatic conduction component 510 may be made of other conductive metal materials, which is not limited in the present application. The first electrostatic conduction component 510 is disposed at the first end 410 of the suction pipe 400 and faces the fan blades 310, without providing the first electrostatic conduction component 510 on the fan assembly 300 or the electric motor 200 so that the assembly and fixation of the first electrostatic conduction component 510 can be simplified, thereby avoiding the problem of improper assembly and fixation.

In some examples, as shown in FIG. 4, to enable the first electrostatic conduction component 510 to fully induce the static electricity on the fan blades 310, the first electrostatic conduction component 510 may be provided around the first end 410 of the suction pipe 400. The first electrostatic conduction component 510 is an annular structure so that static electricity generated by the fan blades 310 can be induced by the first electrostatic conduction component 510 no matter what angle the fan blades 310 rotate to. In addition, the first electrostatic conduction component 510 may be provided around a portion of the first end 410 of the suction pipe 400, which is not limited in the present application.

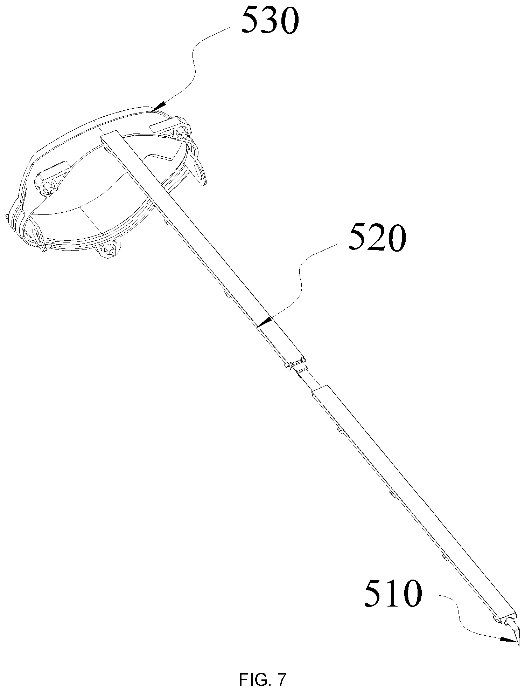

In some examples, as shown in FIG. 7, the first electrostatic conduction component 510 is formed by at least one tip. The first electrostatic conduction component 510 may be provided with at least one tip around the first end 410 of the suction pipe 400, or the first electrostatic conduction component 510 may be provided with at least one tip at some positions at the first end 410 of the suction pipe 400. In addition, the first electrostatic conduction component 510 may be another conductive structure besides the annular structure or the tip, which is not limited in the present application.

The second electrostatic conduction component 520 is disposed on the pipe body 430 of the airflow device, connected to the first electrostatic conduction component 510, and used for conducting the static electricity induced by the first electrostatic conduction component 510. Optionally, the second electrostatic conduction component 520 may be a long strip-shaped component provided along the front and rear direction of the pipe body 430 of the suction pipe 400 (that is, the front and rear direction of the airflow device), thereby conducting static electricity while saving materials. In addition, the second electrostatic conduction component 520 may be in another shape along the front and rear direction of the pipe body 430 of the suction pipe 400 (that is, the front and rear direction of the airflow device), which is not limited in the present application. Optionally, the second electrostatic conduction component 520 may be made of stainless steel. Optionally, the second electrostatic conduction component 520 may be made of other conductive metal materials, which is not limited in the present application. In some examples, the second electrostatic conduction component 520 may be integrally formed. In some examples, the second electrostatic conduction component 520 may include two parts, and the two parts are connected via a conductive structure. In some examples, the second electrostatic conduction component 520 may include three parts, and any two of the three parts are connected via a conductive structure. In some examples, the second electrostatic conduction component 520 may include multiple parts, and any two of the multiple parts are connected via a conductive structure.

In some examples, the second electrostatic conduction component 520 is made of a conductive material with relatively large resistance so that during a process in which static electricity is conducted from the first electrostatic conduction component 510 to the third electrostatic conduction component 530 through the second electrostatic conduction component 520, the conduction speed decreases, thereby avoiding the following problem: the second electrostatic conduction component 520 has a relatively high conduction speed, resulting in rapid instantaneous voltage changes in the airflow device and a probability of damage to the airflow device. In some examples, as shown in FIG. 6, an element 521 is connected to the second electrostatic conduction component 520, and the element 521 has a certain resistance value and is used for decreasing the electrostatic conduction speed of the second electrostatic conduction component 520. Optionally, the element 521 may be a resistor element.

The third electrostatic conduction component 530 is disposed at the second end 420 of the suction pipe 400 and faces away from the fan blades 310. The third electrostatic conduction component 530 is connected to the second electrostatic conduction component 520 and receives the static electricity conducted by the second electrostatic conduction component 520. The third electrostatic conduction component 530 may be in direct or indirect contact with the ground and conduct the static electricity from the second electrostatic conduction component 520 to the ground, thereby releasing static electricity. Specifically, when the airflow device is used, the second end 420 of the suction pipe 400 is continuously in contact with the ground or the sucked objects on the ground. Therefore, when the second end 420 of the suction pipe 400 is in direct contact with the ground, the third electrostatic conduction component 530 is in direct contact with the ground to conduct static electricity to the ground. When the second end 420 of the suction pipe 400 is in contact with the sucked objects on the ground, since the sucked objects on the ground are free of static electricity, it is equivalent to that the second end 420 of the suction pipe 400 is in contact with the ground, that is, the third electrostatic conduction component 530 is in indirect contact with the ground, and static electricity is conducted to the ground through the sucked objects on the ground. In order that when the user uses the airflow device, the third electrostatic conduction component 530 can conduct static electricity to the ground regardless of the angle of the airflow device and how the airflow device is in contact with the ground, the third electrostatic conduction component 530 needs to be disposed around the second end 420 of the suction pipe 400. Optionally, the third electrostatic conduction component 530 may be provided on a portion of the second end 420 of the suction pipe 400, which is not limited in the present application.

Optionally, the third electrostatic conduction component 530 may be made of the aluminum alloy. Optionally, the third electrostatic conduction component 530 may be made of other conductive metal materials, which is not limited in the present application. Since the third electrostatic conduction component 530 is made of metal material, compared with the second end 420 of the suction pipe 400 originally made of the plastic material, the third electrostatic conduction component 530 is more wear-resistant when being in contact with the ground, thereby improving the wear resistance of the suction pipe 400 and the service life of the entire airflow device.

In some examples, the first electrostatic conduction component 510 is fixed to the first end 410 of the suction pipe 400 through a fixing member, and the third electrostatic conduction component 530 is fixed to the second end 420 of the suction pipe 400 through a fixing member. The fixing member may be made of the metal conductive material, and the fixing member may be a screw, or the like, which is not limited in the present application. The second electrostatic conduction component 520 engages with the pipe body 430 of the suction pipe 400 through a clamping member. As shown in FIG. 6, the second electrostatic conduction component 520 may be connected to the fixing member of the first electrostatic conduction component 510 and the fixing member of the third electrostatic conduction component 530 separately to conduct static electricity on the first electrostatic conduction component 510 to the third electrostatic conduction component 530, or the second electrostatic conduction component 520 may be directly connected to the first electrostatic conduction component 510 and the third electrostatic conduction component 530 to conduct static electricity, which is not limited in the present application.

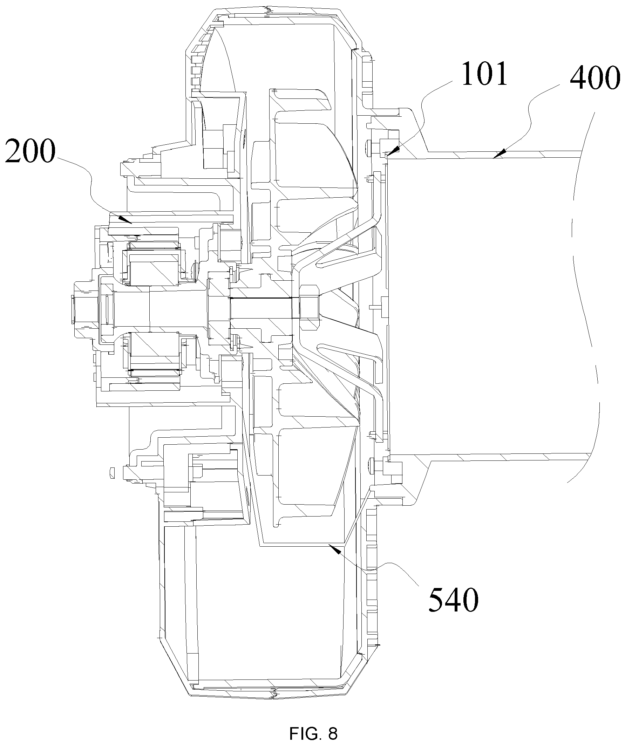

In some examples, as shown in FIG. 8, the first electrostatic conduction device 500 further includes a fourth electrostatic conduction component 540, and an end of the fourth electrostatic conduction component 540 is connected to the electric motor 200 to conduct static electricity in the airflow device outwardly, for example, a great amount of static electricity generated when the fan blades 310 rub against the sucked objects. Optionally, the end of the fourth electrostatic conduction component 540 connected to the electric motor 200 may include a tip. Optionally, the fourth electrostatic conduction component 540 may be a conductive wire.

In some examples, the other end of the fourth electrostatic conduction component 540 may be connected to the first electrostatic conduction component 510 to conduct the static electricity in the airflow device to the first electrostatic conduction component 510, and then the first electrostatic conduction component 510 conducts the static electricity to the second electrostatic conduction component 520 and the third electrostatic conduction component 530, thereby discharging the static electricity through direct or indirect contact between the third electrostatic conduction component 530 and the ground. In some examples, the other end of the fourth electrostatic conduction component 540 may be connected to the second electrostatic conduction component 520, and the second electrostatic conduction component 520 simultaneously receives static electricity from the first electrostatic conduction component 510 and static electricity from the fourth electrostatic conduction component 540 and conducts the static electricity to the third electrostatic conduction component 530 to discharge the static electricity. In addition, when the other end of the fourth electrostatic conduction component 540 is connected to the second electrostatic conduction component 520, the first electrostatic conduction device 500 can conduct static electricity in the airflow device directly through the fourth electrostatic conduction component 540 without providing the first electrostatic conduction component 510.

The first electrostatic conduction component 510 and/or the fourth electrostatic conduction component 540 that is connected to the electric motor 200 are provided at the first end 410 of the suction pipe 400 facing the fan blades 310, the second electrostatic conduction component 520 is provided on the pipe body of the suction pipe 400, and the third electrostatic conduction component 530 is provided at the second end 420 of the suction pipe 400 facing away from the fan blades 310. In this manner, when the airflow device is used, the static electricity generated on the fan blades 310 is conducted to the second electrostatic conduction component 520 through the first electrostatic conduction component 510 and/or the fourth electrostatic conduction component 540, the static electricity is conducted to the third electrostatic conduction component 530 through the second electrostatic conduction component 520, and finally, the static electricity is conducted to the ground through the third electrostatic conduction component 530 so that the static electricity generated by the fan blades 310 can be conducted to the ground, thereby avoiding the risk of static electricity breaking down the control circuit board and the problem of poor user experience due to the hand shocked by static electricity, preventing the airflow device from being easily damaged by static electricity, and improving the user experience.

As shown in FIG. 1, the airflow device further includes the air blowing port 102 and a collection device 600, and the collection device 600 is connected to the air blowing port 102 so that the sucked objects entering the suction pipe 400 can enter the collection device 600 through the air blowing port 102. The sucked objects are sucked up from the suction pipe 400, pass through the air suction port 101 to reach a cutting assembly, are cut, and then enter the collection device 600 from the air blowing port 102. As shown in FIG. 1, a hook is provided on the suction pipe 400 to facilitate hooking the collection device 600 so that the collection device 600 can be hung, thereby occupying a small space and facilitating the operation. In an example, the collection device 600 may be a kraft paper bag. In an example, the collection device 600 may be a cloth bag. In an example, the collection device 600 may be a collection bucket or a collection box.

In some examples, the collection device 600 is made of the conductive material, and the collection device 600 can conduct static electricity. Optionally, the collection device 600 is made of the conductive material, and the conductive material includes a woven material including a conductive material such as metal. When the airflow device is used, a great amount of static electricity generated when the fan blades 310 rub against the sucked objects is conducted to the electric motor 200 and then conducted by the electric motor 200 to the air blowing port 102 and/or the housing 100. Finally, the collection device 600 can induce the static electricity on the air blowing port 102 and/or the housing 100. During use, the collection device 600 may be in direct or indirect contact with the ground, thereby conducting the static electricity in the airflow device to the ground to discharge the static electricity. The specific manner in which the collection device 600 is in direct or indirect contact with the ground is the same as the manner in which the third electrostatic conduction component 530 is in direct or indirect contact with the ground, and the details are not repeated here.

In some examples, the collection device 600 includes a second electrostatic conduction device 610. The second electrostatic conduction device 610 and the collection device 600 may be integrated, or the second electrostatic conduction device 610 and the collection device 600 may be separately provided, which is not limited in the present application. The second electrostatic conduction device 610 includes a first end 611 connected to the collection device 600 and a second end 612 facing away from the collection device 600. Optionally, when the collection device 600 is made of the conductive material, the first end 611 of the second electrostatic conduction device 610 is used for receiving static electricity from the collection device 600 and conducting the static electricity to the second end 612. During use, the second end 612 of the second electrostatic conduction device 610 is in direct or indirect contact with the ground to discharge static electricity. The specific manner in which the second end 612 of the second electrostatic conduction device 610 is in direct or indirect contact with the ground is the same as the manner in which the third electrostatic conduction component 530 is in direct or indirect contact with the ground, and the details are not repeated here.

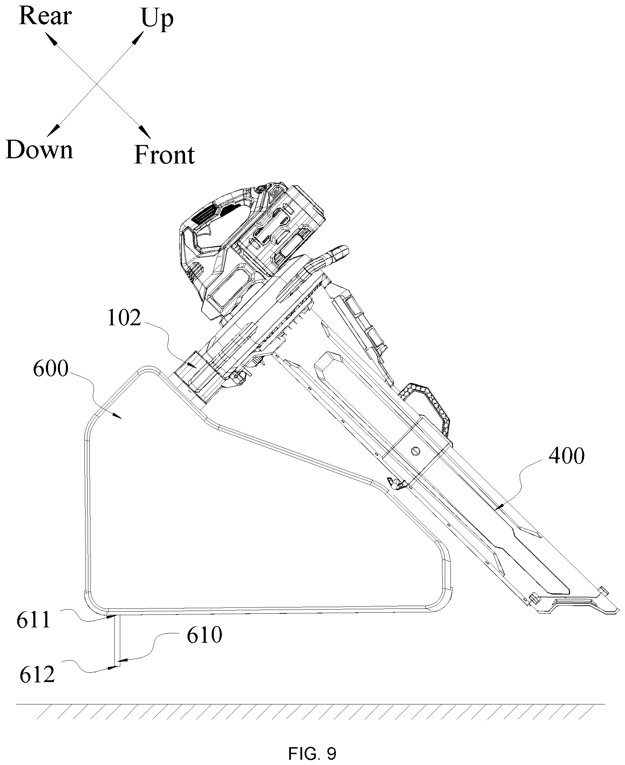

Optionally, as shown in FIG. 9, the second electrostatic conduction device 610 may be disposed on a side of the collection device 600 that is closest to the ground so that the second electrostatic conduction device 610 can be in direct or indirect contact with the ground even when the second electrostatic conduction device 610 is shorter, thereby saving costs. Optionally, the second electrostatic conduction device 610 may be disposed on another part of the collection device 600, which is not limited in the present application.

As shown in FIG. 9, the second electrostatic conduction device 610 may be a conductive wire. Optionally, the second electrostatic conduction device 610 may be of another structural style, which is not limited in the present application. Compared to discharging static electricity directly through direct or indirect contact between the collection device 600 and the ground, the second electrostatic conduction device 610 is provided on the collection device 600 so that static electricity can be discharged even when the collection device 600 is far away from the ground and cannot conduct static electricity, thereby making the shape and volume setting of the collection device 600 more flexible.

In some examples, the airflow device may be provided with the first electrostatic conduction device 500 and the second electrostatic conduction device 610 at the same time so that when the airflow device is used, whether the second end 420 of the suction pipe 400 is in direct or indirect contact with the ground or the collection device 600 is in direct or indirect contact with the ground, static electricity can be conducted to the ground, thereby further reducing the probability of the airflow device being damaged by static electricity.

In some examples, the airflow device further includes a third electrostatic conduction device 700, and the third electrostatic conduction device 700 includes a first end 710, a second end 720, and a connector 730 connecting the first end 710 to the second end 720. The third electrostatic conduction device 700 has the first end 710 facing the fan blades 310, and the distance between the first end 710 and the fan blades 310 is less than or equal to 15 mm, thereby inducing the static electricity generated when the fan blades 310 rub against the sucked objects. The first end 710 of the third electrostatic conduction device 700 is closer to the fan blades 310 than the second end 720.

In some examples, the distance between the first end 710 of the third electrostatic conduction device 700 and the fan blades 310 is greater than 1 mm and less than or equal to 15 mm. In some examples, the distance between the first end 710 of the third electrostatic conduction device 700 and the fan blades 310 is greater than 1 mm and less than or equal to 10 mm. In some examples, the distance between the first end 710 of the third electrostatic conduction device 700 and the fan blades 310 is greater than 1 mm and less than or equal to 5 mm. In some examples, the distance between the first end 710 of the third electrostatic conduction device 700 and the fan blades 310 is greater than 1 mm and less than or equal to 3 mm. In some examples, the distance between the first end 710 of the third electrostatic conduction device 700 and the fan blades 310 is greater than 3 mm and less than or equal to 10 mm. In some examples, the distance between the first end 710 of the third electrostatic conduction device 700 and the fan blades 310 is greater than 3 mm and less than or equal to 5 mm.

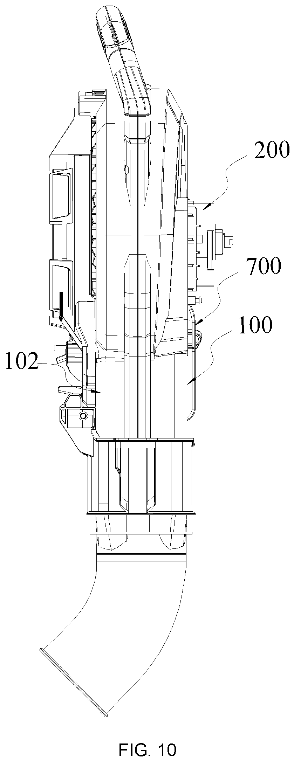

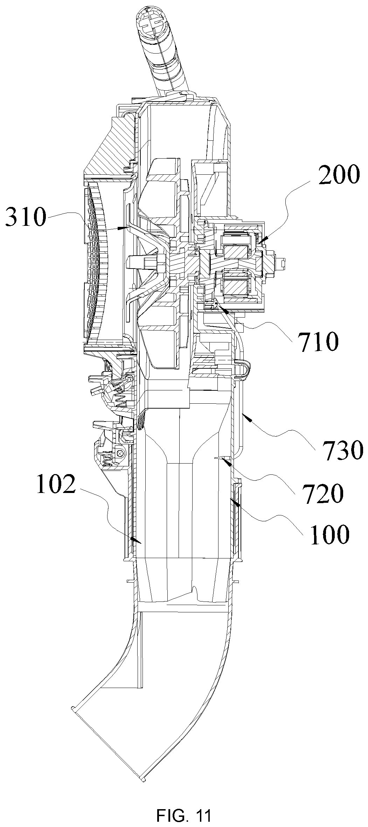

Optionally, as shown in FIGS. 10 and 11, since static electricity generated on the fan blades 310 by friction may be directly transferred to the electric motor 200 connected to the fan blades 310, the first end 710 of the third electrostatic conduction device 700 may be directly electrically connected to the electric motor 200 to conduct static electricity. The second end 720 of the third electrostatic conduction device 700 is connected to the air blowing port 102, the second end 720 of the third electrostatic conduction device 700 includes at least one tip, and the tip has the function of discharging static electricity so that the static electricity conducted from the first end 710 can be discharged into the air, thereby discharging the static electricity of the airflow device. Specifically, the tip of the second end 720 of the third electrostatic conduction device 700 is disposed inside the air blowing port 102. When the airflow device blows air, the static electricity conducted from the first end 710 is discharged into the air and neutralized with the charge in the wind, thereby eliminating static electricity. The second end 720 of the third electrostatic conduction device 700 may include two, three, or four tips. The more tips the second end 720 of the third electrostatic conduction device 700 includes, the better the static electricity discharging effect is. In some examples, the second end 720 of the third electrostatic conduction device 700 may be disposed on another structure that can sense the blowing of air other than the air blowing port, which is not limited in the present application.

In some examples, as shown in FIGS. 10 and 11, to facilitate the installation of the third electrostatic conduction device 700, the connector 730 for fixing the third electrostatic conduction device 700 may be disposed outside the housing 100, and the second end 720 of the third electrostatic conduction device 700 is disposed inside the air blowing port 102 by being fixed on the housing 100. Optionally, the third electrostatic conduction device 700 may be directly mounted inside the housing 100, and the second end 720 of the third electrostatic conduction device 700 may be fixed by providing a fixing assembly inside the housing 100 or the air blowing port 102.

The third electrostatic conduction device 700 is made of the conductive material. Optionally, the third electrostatic conduction device 700 may be a conductive wire structure as shown in the figure. In addition, the third electrostatic conduction device 700 may be another conductive structure, which is not limited in the present application.

Optionally, the airflow device may be provided with the first electrostatic conduction device 500, the second electrostatic conduction device 610, and the third electrostatic conduction device 700 at the same time. Optionally, the airflow device may be provided with any two of the first electrostatic conduction device 500, the second electrostatic conduction device 610, and the third electrostatic conduction device 700 at the same time. Optionally, the airflow device may be provided with any one of the first electrostatic conduction device 500, the second electrostatic conduction device 610, and the third electrostatic conduction device 700, which is not limited in the present application. When three electrostatic conduction devices are provided at the same time or when two electrostatic conduction devices are provided at the same time, the static electricity generated on the fan blades 310 by friction can be eliminated in a variety of manners, thereby improving the effect of the airflow device in eliminating static electricity and further reducing the probability of the airflow device being damaged by static electricity.

In some examples, the airflow device includes a blowing cylinder detachably connected to the air blowing port 102, and the airflow device may use the blowing cylinder to gather scattered objects such as leaves. When the airflow device blows air, the rotating fan blades 310 rub against the air and generate static electricity. At this time, the static electricity generated in the airflow device may be discharged by the third electrostatic conduction device 700.

As shown in FIG. 1, the airflow device further includes a battery pack 800, a plug-in structure is provided at the rear of the housing 100 (that is, at the rear of the airflow device), and the battery pack 800 is detachably plugged into the plug-in structure. In some examples, the direction in which the battery pack 800 is plugged is at an included angle to the vertical direction, making it easier for the user to disassemble and assemble the battery pack 800.

It is to be noted that the technical solutions described in the present application may be applied to different airflow devices such as a blower vacuum with a blowing mode and a suction mode. When the present application mentions the "airflow device", the type of the airflow device is not limited. As long as the device does work through the flow of airflow, the device may be referred to as the "airflow device".

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An airflow device, comprising:
an electric motor (200);
a fan assembly (300) connected to the electric motor, wherein the fan assembly is driven by the electric motor to generate an airflow; and
a suction pipe (400) to suck up a sucked object;
wherein the fan assembly comprises fan blades; and
the airflow device further comprises a first electrostatic conduction device (500), wherein the first electrostatic conduction device comprises an end facing the fan blades and another end for conducting static electricity of the airflow device to the ground.

2. The airflow device of claim 1, wherein the suction pipe comprises a first end (410), a second end (420) and a pipe body, the first end is closer to the fan blades than the second end, and the pipe body connecting the first end to the second end.

3. The airflow device of claim 2, wherein the first electrostatic conduction device comprises a first electrostatic conduction component (510) and a second electrostatic conduction component (520), the first electrostatic conduction component is disposed at the first end, and the second electrostatic conduction component is disposed on the pipe body.

4. The airflow device of claim 3, wherein the second electrostatic conduction component is connected to the first electrostatic conduction component.

5. The airflow device of claim 3, wherein the first electrostatic conduction device comprises a third electrostatic conduction component (530), the third electrostatic conduction component is disposed at the second end, and the third electrostatic conduction component is connected to the second electrostatic conduction component.

6. The airflow device of claim 5, wherein the third electrostatic conduction component is used for being in direct or indirect contact with the ground.

7. The airflow device of claim 1, wherein the first electrostatic conduction device is made of a conductive material.

8. The airflow device of claim 3, wherein a distance between the first electrostatic conduction component and the fan blades is less than or equal to 15 mm.

9. The airflow device of claim 1, further comprising an air blowing port and a collection device (600), wherein the collection device is connected to the air blowing port.

10. The airflow device of claim 9, wherein the collection device is in direct or indirect contact with the ground to conduct the static electricity of the airflow device to the ground.

11. The airflow device of claim 10, wherein the collection device is made of a conductive material.

12. The airflow device of claim 11, wherein the collection device comprises a second electrostatic conduction device, and the second electrostatic conduction device comprises a first end connected to the collection device and a second end facing away from the collection device.

13. The airflow device of claim 12, wherein the second electrostatic conduction device is made of the conductive material, and the second end of the second electrostatic conduction device is used for being in direct or indirect contact with the ground to conduct the static electricity of the airflow device to the ground.

14. The airflow device of claim 9, further comprising a third electrostatic conduction device, wherein the third electrostatic conduction device has a first end (710) facing the fan blades and a second end (720) connected to the air blowing port, and the second end of the third electrostatic conduction device comprises at least one tip.

15. The airflow device of claim 14, wherein the first end of the third electrostatic conduction device is electrically connected to the electric motor, and the at least one tip is disposed inside the air blowing port.
